Europäisches Patentamt

European Patent Office

Office européen des brevets

(11) Veröffentlichungsnummer: **0 145 991**
A2

# (12) EUROPÄISCHE PATENTANMELDUNG

(21) Anmeldenummer: **84114013.0**

(51) Int. Cl.⁴: **G 05 B 19/42**

(22) Anmeldetag: **20.11.84**

(30) Priorität: **25.11.83 SE 8306520**

(71) Anmelder: **ASEA AB, S-721 83 Västeras (SE)**

(43) Veröffentlichungstag der Anmeldung: **26.06.85**
**Patentblatt 85/26**

(72) Erfinder: **Björk, Leif, Dipl.-Ing., Narvavägen 26 B,**
**S-724 68 Västeras (SE)**

(74) Vertreter: **Boecker, Joachim, Dr.-Ing.,**
**Rathenauplatz 2-8, D-6000 Frankfurt a.M. 1 (DE)**

(84) Benannte Vertragsstaaten: **BE DE FR GB IT NL**

(54) Anordnung zur Steuerung des Fluidflusses bei einem Industrieroboter.

(57) Anordnung zur Steuerung des Fluidflusses, beispielsweise eines Klebers oder einer Dichtungsmasse, bei einem Industrieroboter (1-6), dessen Werkzeugträger (6) eine Spritzvorrichtung (7, 8) zum Ausspritzen des Fluids trägt. Gemäß der Erfindung enthält die Anordnung Meßgeräte zur Bestimmung der Translationsgeschwindigkeit der Spritzvorrichtung sowie Flußsteuerungsgeräte, welche den Fluidfluß in Abhängigkeit von der von den Meßgeräten bestimmten Translationsgeschwindigkeit steuern. Der Fluidfluß ist der gemessenen Translationsgeschwindigkeit vorzugsweise proportional.

EP 0 145 991 A2

1.11.1984
21 516 PE
0145991

ASEA AB
S-721 83 Västeras/Schweden

Anordnung zur Steuerung des Fluidflusses bei einem Industrieroboter

Die vorliegende Erfindung betrifft eine Anordnung zur Steuerung des Fluidflusses bei einem Industrieroboter gemäß dem
Oberbegriff des Anspruches 1.

Beispielsweise aus der US-PS 3 525 382 ist es bereits
bekannt, einen Industrieroboter zu verwenden, um ein Fluid
auf einem Objekt (Werkstück) aufzutragen. Ein Fluid im Sinne
der vorliegenden Beschreibung ist ein Material, das keine
feste Form hat, und daher die für Flüssigkeiten und Gase
typischen Eigenschaften hat. Es kann beispielsweise in
Behälter gefüllt werden, durch Rohrleitungen transportiert
werden und durch Düsen ausgespritzt werden. Der Begriff
umfaßt daher u.a. Flüssigkeiten und Gase sowie zähflüssige
Stoffe, wie zum Beispiel Kitt, Kleber, Dichtungsmassen und
dergleichen, sowie pulverförmige feste Stoffe und Suspensionen solcher Stoffe in Gas oder Flüssigkeit. Fluide, die
vorzugsweise mit Hilfe eines Industrieroboters aufgetragen
werden können, sind zum Beispiel Leim, Kitt, Dichtungsmassen
und Malerfarben. Bei dem Aufbringen solcher Fluide mit Hilfe
eines Industrieroboters trägt der Roboter eine Spritzvorrichtung, zum Beispiel eine Spritzpistole, die von dem
Roboter längs einer einprogrammierten Bahn geführt wird,
wobei das Fluid durch eine in der Spritzvorrichtung
angebrachte Düse ausgespritzt wird. Normalerweise besteht
der Wunsch, daß pro Längeneinheit der durchlaufenden Bahn
eine konstante Fluidmenge ausgespritzt (aufgetragen) wird.

1.11.1984
21 516 PE
0145991

Wenn der Fluidfluß, also die pro Zeiteinheit austretende Fluidmenge, konstant bleiben soll, dann muß nach den bekannten Verfahren die Geschwindigkeit der Spritzvorrichtung längs ihrer Bahn konstant sein. Das bedeutet, daß die Geschwindigkeit durch den im gegebenen Arbeitszyklus am schwierigsten zu durchlaufenden Teil der Bahn bestimmt wird, so daß sie während des Durchlaufens der übrigen Teile der Bahn unnötig niedrig gehalten werden muß. Die Zeit für das Durchlaufen eines Arbeitszyklus wird daher sehr groß, was aus wirtschaftlicher Sicht sehr nachteilig ist.

Gemäß der oben genannten US-PS kann die Spritzvorrichtung so beschaffen sein, daß der Fluß abschnittsweise von der Steueranordnung des Roboters steuerbar ist. Bei der Programmierung wird dann für jeden Abschnitt der Bahn der gewünschte Wert des Flusses im Programm berücksichtigt. Dieses Verfahren ermöglicht eine Verkürzung der für einen Arbeitszyklus erforderlichen Zeit. Das Verfahren hat jedoch erhebliche Nachteile. Die Programmierung ist langsam und kompliziert, da für jede Änderung der programmierten Geschwindigkeit ein neuer Wert für den Fluß berechnet oder erprobt werden muß und in das Programm eingespeichert werden muß. Ferner haben genauere Untersuchungen ergeben, daß die wirkliche Bewegungsgeschwindigkeit des Roboters (der Spritzvorrichtung) längs einer einprogrammierten Bahn zumindest in gewissen Abschnitten der Bahn große Abweichungen von dem einprogrammierten Geschwindigkeitssollwert aufweist, u.a. zum Beispiel infolge von Unvollkommenheiten im Servosystem und in den Berechnungsvorrichtungen und infolge des beschränkten Beschleunigungs- und Verzögerungsvermögens. Dies hat zur Folge, daß die abgegebene Fluidmenge pro Längeneinheit der Bahn entsprechend große Variationen zeigt, was für viele Anwendungsgebiete ein großer Nachteil ist. Bei der genannten bekannten Anordnung sind außerdem die Flußsteuerungsvorrichtungen der Spritzvorrichtung an das Steuersystem des Roboters angeschlossen und müssen diesem angepaßt sein. Daher ist es schwierig oder gar unmöglich, dieselbe
Spritzvorrichtung oder dieselbe Art von Spritzvorrichtungen
für verschiedene Robotertypen zu verwenden, was für den
Anwender ein großer Nachteil ist.

Der Erfindung liegt die Aufgabe zugrunde eine Anordnung der
eingangs genannten Art zu entwickeln, welche einerseits eine
sehr einfache Programmierung und Umprogrammierung eines
Arbeitszyklus erlaubt und andererseits die Abgabe einer
konstanten Menge des Fluids pro Längeneinheit der Bahn ermöglicht, unabhängig von Abweichungen zwischen der wirklichen und der gewünschten Bahngeschwindigkeit des Roboters.
Ferner soll es mit der Anordnung gemäß der Erfindung möglich
sein, die Spritzvorrichtung auf einfache Weise an den
Roboter anzuschließen und dieselbe Spritzvorrichtung oder
Spritzvorrichtungart bei Robotern verschiedenen Typs zu
verwenden.

Zur Lösung dieser Aufgabe wird eine Anordnung gemäß dem
Oberbegriff des Anspruches 1 vorgeschlagen, welche erfindungsgemäß die im kennzeichnenden Teil des Anspruches 1 genannten Merkmale hat.

Vorteilhafte Ausgestaltungen der Erfindung sind in den weiteren Ansprüchen genannt.

Anhand der in den Figuren gezeigten Ausführungsbeispiele
soll die Erfindung näher erläutert werden. Es zeigen

Figur 1 einen Industrieroboter, der zum Auftragen eines
         Fluids auf einem Werkstück vorgesehen ist,

Figur 2 ein Ausführungsform für die Anbringung der Beschleu-
         nigungsmesser an der Spritzvorrichtung,

1.11.1984
21 516 PE
0145991

Figur 3 ein Blockschaltbild für eine Steueranordnung gemäß der Erfindung zur Steuerung des Fluidflusses,

Figur 4 ein Ausführungsform dafür, wie die Orientierung der Spritzvorrichtung im Raum relativ zur Orientierung der Beschleunigungsmesser variierbar gemacht werden kann.

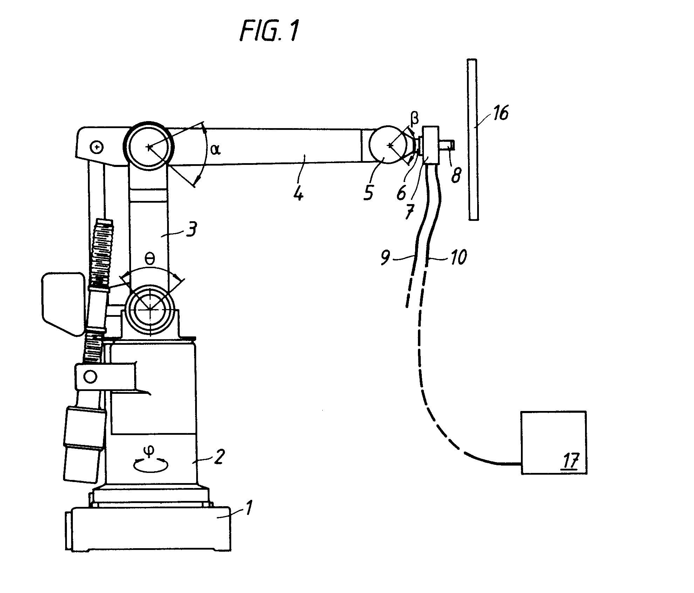

Figur 1 zeigt einen Industrieroboter, der mit seinem Fuß 1 auf einer Unterlage befestigt ist. Das Stativ 2 ist um eine Achse drehbar, die senkrecht zur Hauptebene des Fußes 1 steht, wobei der Drehwinkel des Stativs relativ zum Fuß mit $\gamma$ bezeichnet ist. Der Unterarm 3 ist drehbar um eine zur Zeichenebene senkrechte Achse am oberen Ende des Stativs angeordnet. Der Drehwinkel des Unterarms relativ zum Stativ ist mit $\vartheta$ bezeichnet. Der Oberarm 4 ist drehbar am oberen Ende des Unterarms 3 gelagert, und sein Drehwinkel relativ zum Unterarm um eine senkrecht zur Zeichenebene verlaufende Achse ist $\alpha$ bezeichnet. Am äußeren Ende des Oberarms 4 ist ein Handgelenk 5 angeordnet, das um eine Achse senkrecht zur Zeichenebene drehbar ist, wobei der Drehwinkel des Handgelenks relativ zum Oberarm 4 mit ß bezeichnet ist. Am Handgelenk 5 ist eine Hand 6 angeordnet, die relativ zum Handgelenk um eine in der Zeichenebene liegende Achse drehbar ist. Die Hand ist als Werkzeughalter ausgebildet und trägt eine Vorrichtung 7,8 zum Spritzen eines Fluids, beispielsweise ein Leim oder eine Dichtungsmasse. Für die Zufuhr des Fluids zu der Spritzvorrichtung ist ein Schlauch 9 vorhanden, während ein Kabel 10 zur Übertragung von Leistung und Steuersignalen zwischen der Spritzvorrichtung und der Steueranordnung dient. Das Werkstück 16, auf welches das Fluid aufgespritzt wird, ist nur schematisch dargestellt.

Bei dem Roboter kann es sich um einen beliebiger Art handeln, beispielsweise um einen Typ, wie er bekannt ist aus

1.11.1984
21 516 PE
0145991

der US-PS 4 076 131, Figur 1, der ASEA-Information YB 110-301, dem ASEA Journal 1982, Volumen 55, Nr. 6, Seiten 139-150, oder der ASEA-Information CK 09-1101 E.

Der Roboter ist in einer in diesen Druckschriften beschriebenen Weise mit Steuer- und Betätigungsvorrichtungen versehen, mit deren Hilfe ein gewünschter Arbeitszyklus programmiert und danach bei automatischem Betrieb beliebig oft durchlaufen werden kann.

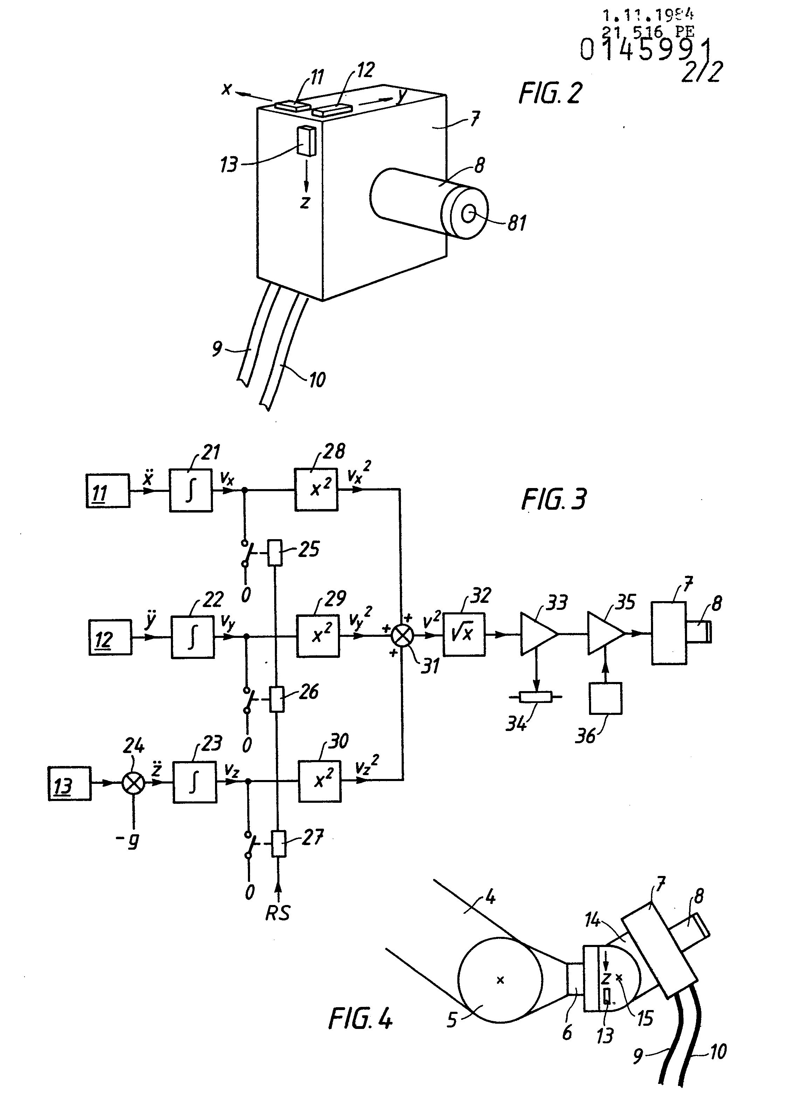

Figur 2 zeigt die Spritzvorrichtung für das Fluid, welche im gezeigten Ausführungsbeispiel eine Leimpistole 8 ist, die mit einer Austrittsöffnung 81 für das Fluid versehen ist. Die Leimpistole kann beispielsweise eine solche sein, wie sie von der Firma Intec, Bielenberg GmbH & Co gefertigt wird und die eine steuerbare Düsenöffnung hat. Eine solche Pistole ist mit einem in Längsrichtung der Pistole beweglichen Nadelventil versehen, das in Abhängigkeit von seiner axialen Lage die Austrittsöffnung 81 der Pistole mehr oder weniger verschließt. Die Lage des Nadelventils wird durch ein der Leimpistole zugeführtes elektrisches Signal gesteuert, das über eine elektromechanische Antriebsvorrichtung und eine Nockenscheibe die Lage des Nadelventils steuert. Die Leimpistole ist so ausgebildet, daß, wenn das Fluid der Pistole mit einem im wesentlichen konstanten Druck zugeführt wird, ein linearer Zusammenhang besteht zwischen der Größe des der Leimpistole zugeführten elektrischen Steuersignals und dem Fluidfluß, d.h. der pro Zeiteinheit ausgespritzten Fluidmenge. Das elektrische Steuersignal wird der Leimpistole durch das Kabel 10 zugeführt, und die Antriebsvorrichtungen der Pistole sind in einem Gehäuse 7 an dem von der Austrittsöffnung (Düse) 81 abgewandten Ende der Pistole angeordnet.

Zur Bestimmung der Translationsgeschwindigkeit der Leimpistole sind an dieser drei Beschleunigungsmesser 11, 12 und

1.11.1984
21 516 PE
0145991

13 in der Weise angebracht, daß ihre Abtastrichtungen senkrecht zueinander stehen. Die Ausgangssignale der Beschleunigungsmesser werden über das Kabel 10 der Steueranordnung 17 zugeführt, die anhand von Figur 3 näher beschrieben werden soll:

Figur 3 zeigt die drei Beschleunigungsmesser 11, 12, 13, deren Abtastrichtungen in Figur 2 mit x, y, z bezeichnet sind. In dem gezeigten Beispiel wird vorausgesetzt, daß der Roboter in an sich bekannter Weise so programmiert ist, daß bei allen Bewegungen des Roboters die Abtastrichtung des Beschleunigungsmessers 13 (z in Figur 2) ständig vertikal verläuft. Die Ausgangssignale der Beschleunigungsmesser 11 und 12 sind ein Maß für die Beschleunigungen $\ddot{x}$ bzw. $\ddot{y}$ des Roboters in x- und y-Richtung. Auf den Beschleunigungsmesser 13, dessen Abtastrichtung vertikal verläuft, wirken einerseits die durch die Bewegungen des Roboters verursachten Beschleunigungen und andererseits die Erdbeschleunigung g. In einem Summierungsglied 24 wird daher zu dem Ausgangssignal des Beschleunigungsmessers 23 ein negatives Signal -g addiert, welches der Erdbeschleunigung entspricht. Das Ausgangssignal des Gliedes 24 beschreibt daher nur die durch die Bewegung des Roboters verursachte Beschleunigung $\ddot{z}$ in z-Richtung. Die drei Signale $\ddot{x}$, $\ddot{y}$ und $\ddot{z}$ werden in je einem Integrator 21 bis 23 integriert, deren Ausgangssignal $v_x$, $v_y$ und $v_z$ Maße für die Geschwindigkeitskomponenten des Roboters in x-, y- und z-Richtung sind. Die in Figur 3 gezeigte Steuereinheit kann zweckmäßigerweise in Analogtechnik aufgebaut sein, was jedoch unvermeidbar zu einer gewissen Drift (Nullpunktsverschiebung) der Integratoren führt. Um die Einwirkung dieser Drift möglichst klein zu halten ist die Steueranordnung mit drei Relais 25 bis 27 ausgerüstet, denen am Ende jedes Arbeitszyklus des Roboters ein Steuerimpuls RS bei stillstehendem Roboter zugeführt wird. Die Relaiskontakte schließen dabei die Ausgänge der Integratoren an eine Spannung an, die $v_x = v_y = v_z = 0$ entspricht. Auf diese Weise bleibt jeder Arbeitszyklus von einer eventuellen, während früherer Arbeitszyklen aufgetretenen Drift
der Integratoren unbeeinflußt. Die Signale $v_x$, $v_y$ und $v_z$
werden in Quadriergliedern 28, 29 und 30 quadriert. Die Ausgangssignale dieser Glieder werden einem Summierungsglied 31
zugeführt, dessen Ausgangssignal $v^2 = v_x^2 + v_y^2 + v_z^2$ ist.
Dieses Signal wird einem die Quadratwurzel bildenden Glied
32 zugeführt, dessen Ausgangssignal v ein Maß für die Translationsgeschwindigkeit der Leimpistole ist. Das Signal v
wird einem Verstärker 33 mit einstellbarer Verstärkung zugeführt, wobei der Verstärkungsgrad von dem Signal abhängig
ist, das der Verstärker von einem manuell einstellbaren
Potentiometer 34 erhält. Mit diesem Potentiometer kann das
Verhältnis zwischen Fluidfluß und Geschwindigkeit, d.h. die
pro Längeneinheit der von der Pistole durchlaufenden Bahn
ausgespritzte Fluidmenge eingestellt werden. Das Ausgangssignal des Verstärkers wird einem weiteren Verstärker 35
zugeführt, dessen Verstärkungsgrad ebenfalls einstellbar
ist, und zwar in Abhängigkeits eines Signals, das dem
Verstärker 35 von einem Temperaturgeber 36 zugeführt wird.
Der Temperaturgeber kann beispielsweise ein Thermistor, ein
Thermoelement oder dergleichen sein. Er ist so ausgebildet,
daß er die Verstärkung des Verstärkers 35 in einer Weise
steuert, daß temperaturabhängige Veränderungen der Viskosität des Fluids kompensiert werden. Der Temperaturgeber
kann beispielsweise einfach die Umgebungstemperatur des
Roboters abtasten. Wenn jedoch anzunehmen ist, daß diese
Temperatur erheblich von der Temperatur des Fluids abweicht,
dann muß natürlich die Temperatur des Fluids gemessen
werden. Das Ausgangssignal des Verstärkers 35 wird dem
Steuer- und Antriebsglied 7 der Leimpistole 8 zugeführt und
steuert in der oben beschriebenen Weise den Querschnitt der
Austrittsöffnung 81 der Leimpistole.

Bei geeigneter Ausführung der zugehörigen Glieder steuert
die beschriebene Anordnung den Fluß der Leimpistole während des ganzen Arbeitsablaufes in der Weise, daß der Fluß der Translationsgeschwindigkeit v der Pistole proportional ist. Unabhängig von den Bewegungen der Pistole wird also eine konstante Menge Fluid pro Längeneinheit der Bewegung ausgespritzt, was mit bekannten Anordnungen nicht möglich ist. Der Roboter kann also so programmiert werden, daß er sich in beliebiger Weise und mit einer während eines Arbeitszyklus beliebig variierbaren Geschwindigkeit bewegt, wodurch die Zeit für einen Arbeitszyklus erheblich reduziert werden kann. Wie oben erwähnt, wird die Geschwindigkeit des Roboters zumindest während Teile seiner Bewegung wesentlich von dem programmierten Sollwert für die Geschwindigkeit abweichen. Dadurch, daß bei dem oben beschriebenen System die Geschwindigkeit ständig gemessen wird, ist der Fluidfluß der tatsächlichen momentanen Geschwindigkeit proportional, und die ausgespritzte Fluidmenge pro Längeneinheit der Bahn ist daher unabhängig von den hier genannten Geschwindigkeitsabweichungen konstant. Um den Arbeitszyklus zu verbessern oder zu verändern oder ihn neuen Werkstücktypen anzupassen, muß ein Roboter ganz oder teilweise mehr oder weniger oft umprogrammiert werden. Bei einem Roboter mit einer Anordnung gemäß der Erfindung kann eine solche Umprogrammierung vorgenommen werden, ohne daß irgendwelche Rücksicht auf die Flußregelung genommen zu werden braucht. Die ausgespritzte Fluidmenge pro Längeneinheit der Bahn wird nämlich, wie oben beschrieben, von der in jedem Augenblick gemessenen wirklichen Translationsgeschwindigkeit der Leimpistole gesteuert und ist daher von eventuellen Programmänderungen vollkommen unabhängig. Wenn eine Veränderung der eingestellten Fluidmenge pro Längeneinheit gewünscht wird, so kann dies leicht mit Hilfe des Potentiometers 34 in Figur 3 erreicht werden. Ein Eingriff in das Roboterprogramm oder eine Veränderung desselben ist also nicht erforderlich, um eine Veränderung der Flußmenge pro Längeneinheit zu erreichen. Die vorstehend beschriebene Anordnung zur Flußsteuerung ist vollkommen autonom, d.h. sie ist von der Steueran-

1.11.1984
21 516 PE
0145991

ordnung des Roboters völlig unabhängig. Die Leimpistole mit der zugehörigen Steueranordnung kann daher bei Robotern beliebigen Typs verwendet und zwischen verschiedenen Robotern ausgewechselt werden, ohne daß irgendwelche Veränderungen erforderlich sind.

Die Plazierung der Beschleunigungsmesser in Figur 2 ist nur schematisch gezeigt. Die Beschleunigungsmesser können alternativ in dem Gehäuse 7 oder eventuell auf der Leimpistole 8 selbst plaziert werden. Allgemein gilt, daß sie so nahe wie möglich an der Austrittsöffnung 81 der Pistole zu plazieren sind, um eine möglichst genaue Messung der Translationsgeschwindigkeit der Austrittsöffnung zu erhalten, da sie die für die Flußsteuerung kritische Größe ist. Bei der in Figur 3 gezeigten Steueranordnung wurde vorausgesetzt, daß sie in Analogietechnik aufgebaut ist; sie kann alternativ natürlich auch in Digitaltechnik oder in einer Kombination aus analoger und digitaler Technik aufgebaut sein. Die in den Figuren 2 und 3 gezeigten Beschleunigungsmesser können beispielsweise nach dem piezoresistiven Prinzip arbeiten, wie beispielsweise das Fabrikat Endevco, Model 7265A-HS. Um Gewicht und Abmessungen klein zu halten, kann es angebracht sein, nur die Beschleunigungsmesser 11, 12 und 13 auf der Leimpistole 7, 8 anzubringen und den Rest der in Figur 3 dargestellten Steueranordnung in der fest plazierten Steuereinheit 17 in Fig. 1 unterzubringen. Eventuell können die nicht auf der Leimpistole montierten Teile der Steueranordnung zusammen mit der Steueranordnung des Industrieroboters untergebracht werden.

Die oben beschriebenen Beschleunigungsmesser sind nur ein Beispiel für Geber, die zur Messung der Translationsgeschwindigkeit an der Spritzvorrichtung angebracht werden können. Statt dieser Beschleunigungsmesser können beliebige andere Geber, wie beispielsweise akustische, optische oder elektromagnetische, zur Messung der Translationsgeschwindig-

1.11.1984
21 516 PE
0145991

keit der Spritzvorrichtung verwendet werden. Abhängig von der Zweckmäßigkeit und dem Typ der Geber oder Meßgeräte können diese zusammen mit der Spritzvorrichtung angeordnet werden und sich zusammen mit dieser bewegen oder sie können fest am Roboter angeordnet sein.

Die Lage der Roboterhand im Raum ist eindeutig durch die Drehwinkel der verschiedenen Drehachsen des Roboters bestimmt. Die Translationsgeschwindigkeit der Roboterhand und somit die der Spritzvorrichtung ist daher eine Funktion der Drehgeschwindigkeiten der einzelnen Roboterachsen. Diese Drehgeschwindigkeiten können beispielsweise durch Kreisel gemessen werden, die an den Armen und dem Stativ des Roboters angebracht sind. Die Ausgangssignale der Kreisel können dann Berechnungsgliedern zugeführt werden, die aus den erhaltenen Rotationsgeschwindigkeiten und den Abmessungen des Roboters die Translationsgeschwindigkeit der Roboterhand berechnen. Eventuell brauchen winkelgeschwindigkeitserfassende Kreisel nicht in allen Roboterachsen montiert zu werden. Mit Hilfe des auf nur einer Roboterachse oder der auf nur einigen Roboterachsen montierten Kreisel läßt sich für bestimmte Bewegungsschemen ein ausreichend genauer Näherungswert für die Translationsgeschwindigkeit der Spritzvorrichtung gewinnen. Alternativ können zur Abtastung der Winkelgeschwindigkeiten der verschiedenen Roboterachsen Tachometergeneratoren verwendet werden, deren Ausgangssignale ebenso wie die Ausgangssignale der Kreisel Berechnungsglieder zur Berechnung der Translationsgeschwindigkeit der Roboterhand zugeführt werden.

Die anhand der Figuren 1 bis 3 beschriebene Anordnung setzt voraus, daß der Roboter so programmiert ist, daß die Abtastrichtung eines Beschleunigungsmessers stets in vertikaler Richtung verläuft. Dies bedingt eine Einschränkung der Arbeitsmöglichkeiten des Roboters, ergibt jedoch eine außerordentlich einfache Steueranordnung. Wenn verlangt wird, daß

1.11.1984
21 516 PE

0145991

die räumliche Orientierung der Spritzvorrichtung während eines Arbeitszyklus frei variiert werden kann, so kann die Kompensation der Erdbeschleunigung dadurch erfolgen, daß sie entsprechend der augenblicklichen räumlichen Orientierung der Spritzvorrichtung in drei in die Abtastrichtungen der drei Beschleunigungsmesser fallenden Komponenten aufgeteilt wird, die dann von den Ausgangssignalen ihrer zugehörigen Beschleunigungsmesser subtrahiert werden. Dies erfordert eine kontinuierliche Information über die Orientierung der Spritzvorrichtung im Raume, die im allgemeinen von der Steueranordnung des Roboters erhältlich ist. Da die Geometrie des Roboters bekannt ist, kann alternativ ein Berechnungsglied verwendet werden, welches die Orientierung der Spritzvorrichtung aus den von den Drehgebern der einzelnen Roboterachsen gemessenen Drehwinkel berechnet.

Figur 4 zeigt ein alternatives Verfahren, um hinsichtlich der Orientierung der Spritzvorrichtung im Raum während eines Arbeitszyklus frei zu sein. Dabei sind die Beschleunigungsmesser, von denen nur der Beschleunigungsmesser 13 in Figur 4 dargestellt ist, auf der Roboterhand 6 montiert. Die Spritzvorrichtung 7,8 ist an einem Werkzeughalter 14 angebracht, der im Verhältnis zur Roboterhand 6 um eine senkrecht zur Zeichenebene verlaufende Achse 15 drehbar ist. Die Drehung um diese Achse wird in gleicher Weise wie die Bewegungen der übrigen Achsen des Roboters in die Steueranordnung des Roboters einprogrammiert und von dieser gesteuert. Bei dieser Ausführungsform sind die Beschleunigungsmesser von der Düsenöffnung der Spritzvorrichtung weiter entfernt angeordnet. Es ist jedoch möglich, den dadurch verursachten Fehler durch geeignete Ausgestaltung der zugehörigen Einheiten so klein zu halten, daß die gewünschte Konstanthaltung der Fluidmenge pro Längeneinheit der Bahn in ausreichendem Maße erreicht wird.

1.11.1984
21 516 PE

0145991

Die vorstehend beschriebenen Ausführungsbeispiele der Anordnung nach der Erfindung beziehen sich auf die Führung von Leimpistolen, bei welchen der Fluidfluß mit Hilfe eines verstellbaren Düsenquerschnittes variiert wird. Bei der Anordnung nach der Erfindung können zur Steuerung des Flußes natürlich auch andere Arten von Zuteilern verwendet werden, wie beispielsweise Dosierpumpen mit variabler Dosierung.

Patentansprüche

1. Anordnung zur Steuerung des Fluidflusses bei einem Industrieroboter (1 - 6), dessen Werkzeugträger (6) eine Spritzvorrichtung (7, 8) zum Ausspritzen eines Fluids trägt, d a d u r c h   g e k e n n z e i c h n e t, daß die Anordnung Meßgeräte (11-13, 21-32) zur Bestimmung der Translationsgeschwindigkeit (v) der Spritzvorrichtung sowie Flußsteuerungsgeräte (7, 33-36) enthält, welche den Fluidfluß in Abhängigkeit von der von den Meßgeräten bestimmten Translationsgeschwindigkeit steuern.

2. Anordnung nach Anspruch 1, d a d u r c h   g e k e n n z e i c h n e t, daß die Meßgeräte Geber (11-13) enthalten, welche eine Bewegungsgröße der Spritzvorrichtung direkt erfassen.

3. Anordnung nach Anspruch 2, d a d u r c h   g e k e n n z e i c h n e t, daß die Meßgeräte Geber (11 - 13) enthalten, welche im Anschluß an die Spritzvorrichtung montiert sind.

4. Anordnung nach Anspruch 3, d a d u r c h   g e k e n n z e i c h n e t, daß die Geber Beschleunigungsmesser (11 - 13) sind und daß die Meßgeräte integrierende Glieder (21 - 23) zur Integration der Ausgangssignale der Beschleunigungsmesser enthalten.

5. Anordnung nach Anspruch 4, d a d u r c h   g e k e n n z e i c h n e t, daß sie drei rechtwinklig zueinander angeordnete Beschleunigungsmesser (11 - 13), Integratoren (21 - 23) zur Bildung von Geschwindigkeitssignalen durch Integration der Ausgangssignale der Beschleunigungsmesser, quadrierende Glieder (28 - 30) zur Quadrierung der Geschwindigkeitssignale, ein Summierungsglied (31) zur Summierung

1.11.1984
21 516 PE
0145991

der quadrierten Geschwindigkeitssignale und Glieder (32) zur Bildung eines Signals enthält, das die Translationsgeschwindigkeit der Spritzvorrichtung durch Bildung der Quadratwurzel aus dem Ausgangssignal des Summierungsgliedes bildet.

6. Anordnung nach einem der Ansprüche 2 bis 5, d a - d u r c h   g e k e n n z e i c h n e t, daß sie Glieder (24) zur Kompensation der Erdbeschleunigung enthält.

7. Anordnung nach einem der Ansprüche 2 bis 6, d a - d u r c h   g e k e n n z e i c h n e t, daß die Spritzvorrichtung (7, 8) relativ zu der Vorrichtung (6), welche die Beschleunigungsmesser (11 - 13) trägt, drehbar angeordnet ist.

8. Anordnung nach einem der vorhergehenden Ansprüche, d a - d u r c h   g e k e n n z e i c h n e t, daß die Flußsteuglieder den Fluidfluß im wesentlichen proportional zu der Translationsgeschwindigkeit steuern.

1/2

FIG.1

*FIG. 2*

*FIG. 3*

*FIG. 4*